# EUROPEAN PATENT SPECIFICATION

(11) **EP 2 302 818 B1**
(45) Date of publication and mention of the grant of the patent: **05.09.2018**
(21) Application number: 09800095.3
(22) Date of filing: 03.07.2009
(51) Int. Cl.: H04B 3/54, H04L 5/02, H04B 1/04, H04L 5/00

(54) **MULTI-BAND DATA TRANSMISSION METHOD**
MEHRBANDDATENÜBERTRAGUNGSVERFAHREN
PROCÉDÉ DE TRANSMISSION DE DONNÉES MULTIBANDES

(30) Priority: 14.07.2008 ES 200802091
(43) Date of publication of application: 30.03.2011
(73) Proprietor: Marvell Hispania S.L., Madrid (ES)
(72) Inventor: BLASCO CLARET, Jorge Vicente, E-46020 Valencia (ES); IRANZO MOLINERO, Salvador, E-46008 Valencia (ES); BADENES CORELLA, Agustin, E-12003 Castellón (ES); GONZALEZ MORENO, Jose Luis, E-46950 Xirivella (Valencia) (ES); TORRES CANTÓN, Luis Manuel, E-46015 Valencia (ES)
(74) Representative: Grünecker Patent- und Rechtsanwälte PartG mbB
(86) International application number: PCT/ES2009/070273
(87) International publication number: WO 2010/010216

(56) References cited:
- EP-A1- 1 770 870
- EP-A2- 0 975 097
- EP-A2- 1 388 954
- WO-A1-2004/100392
- WO-A2-01/95518
- WO-A2-2009/054547
- WO-A2-2009/054547
- US-A1- 2007 076 666
- Jose Antonio Cortes Arrabal: "Modulation and Multiple Access Techniques for Indoor Broadband Power-Line Communications", Universidad de Málaga, 30 June 2007 (2007-06-30), XP055251452, Retrieved from the Internet: URL:http://www.biblioteca.uma.es/bbldoc/te sisuma/17114500.pdf [retrieved on 2016-02-18]
- LOTHAR STADELMEIER ET AL: "MIMO for Inhome Power Line Communications", SOURCE AND CHANNEL CODING (SCC), 2008 7TH INTERNATIONAL ITG CONFERENCE ON, 14 January 2008 (2008-01-14), pages 1-6, XP055168688, Ulm, Germany ISBN: 978-3-80-073077-3

## Description

### OBJECT OF THE INVENTION

This invention, as expressed in this description, relates to a multiband data transmission process which permits using a greater bandwidth in the system in which it is implemented, making use of various frequency bands depending on the channel used in the communication and synchronizing the various bands.

The main advantage of the invention is that when using multiple bands, the system bandwidth is increased and as such, the volume of transmittable information, and when synchronizing such bands, easier digital implementation is achieved and the analog filter specifications are simplified, which permits increasing the transmission capacity at low cost.

Even though the process of the invention can be used for any communication system irrespective of the transmission means, it is especially useful in means exposed to noise or interference at certain frequencies, or in means where the maximum injectable power spectral density varies with the frequency due to the standards or codes as is the case with the power network used as communication channel, since the process can use bands which do not coincide with the frequencies affected by the noise or the interference and can adapt the features of each band to the power spectral density that the standards or codes permit to inject.

### INVENTION BACKGROUND

In the majority of the communication systems, increasing the bandwidth translates into a greater transmission capacity. The problem is that the physical means or the communication channel tends to have some frequency variables, with which it is not possible to use more than certain frequency fragments or bands. For instance, on the power network, the power that can be injected from 30 MHz varies with respect to the one where it is possible to inject at frequencies below 30 MHz due to the existing codes. In addition, the power network has other features that make is less desirable as transmission means: the noise base reduces with frequency, attenuation increases with frequency, and there is high noise level in the modulated frequency radio band (from 88.5 to 108 MHz).

As such, to improve communication capacity, a communication system must use certain bands (this is, frequency ranges) which suggests the inclusion of different filters to separate each band and a final cost increase of the system considered. The invention process does away with this inconvenience and permits that the system implementing it is a reduced cost system by synchronizing the various frequency bands used, which simplifies and brings down the cost of such filters and reduces the final cost of the system.

In the state of the art, there are various technologies associated with multiband transmission. For instance, in patent WO2004/100392, a system is shown with various overlapping sub-bands for which separation takes place digitally through a digital filter bank. In the invention, the bands are synchronized and an analog separation takes place, thanks to which the design of the analog front-end (AFE) is simplified as well as of the converters since the dynamic range which has to support each of the bands is reduced in comparison with the dynamic range which would have to be supported if the band would be treated as a single analog band. In addition, it allows for an optimized design in terms of gain and noise base of the analog front-end (AFE) for each of the bands.

The process for using a higher frequency band is known to the state of the art and multiple implementations are possible, like the ones shown in patent US6985715 and US2002/0010870. In any event, these patents only show how to go up in frequency to use another frequency band, and they do not use such bands simultaneously, so that they do not anticipate the process of the invention nor can it be deduced from them.

On the other hand, in patent WO2007039723, various independent and different systems are proposed that operate on different frequency bands, having a physical part (PHY) and a means access part (MAC) different for each of the bands. The inconvenience of this is that the transmission and receiving chains at the digital level must be duplicated, a high cost for the analog separation filters and a greater guard bank between the different systems, which is solved with the process of the invention thanks to synchronization among the various bands.

Other patents can be mentioned, such as US2008006310 in which appears the variable symbol time concept, but not the one of its simultaneous use in multiple bands, a feature which cannot be inferred from such description.

US 2007/076666 A1 relates to multi-wideband communications over power lines. Systems and methods for communicating over a power line are configured to substantially simultaneously communicate over a plurality of wide band frequency ranges. Signals may be communicated to or from a communication node at two different frequencies simultaneously.

It is the object of the present invention to provide an improved system and method for transmitting and receiving multiband data.

This object is solved by the subject matter of the independent claims.

Embodiments are defined by the dependent claims.

Below, to facilitate a better understanding of this description and forming an integral part thereof, some Figures follow in which the object of the invention, for purposes of information and without restriction.

### BRIEF DESCRIPTION OF THE FIGURES

**Figure 1** - Shows an implementation of the process in the form of a block diagram.
**Figure 2** - Shows the relationship between times between various bands used in the process.
**Figure 3** - Shows the ratio between the separation between frequency carriers and the symbol duration for two bands.
**Figure 4** - Represents the power injected in the various bands for an implementation on the power network.
**Figure 5** **-** Shows the ratio between the power spectral density injected and the background noise when using the power line as means of communication.
**Figure 6** - Shows the various bands that can be used for the invention when making communications over the power network.
**Figure 7** **-** Represents an embodiment in which the processing in the digital parts of the various bands is done by processing said bands in series.
**Figure 8** - Shows a form for making compatible systems that use bands synchronously and asynchronously.
**Figure 9** **-** Shows three different cases for performing the transmission of information to two users using two different bands.
**Figure 10** - Represents three forms for performing the analog front-end in the process of the invention.
**Figure 11** - Shows various examples of usable bands and channels when MIMO processing is added to the process of the invention.

### DESCRIPTION OF VARIOUS EXAMPLES FOR PERFORMING THE INVENTION

Below follows the description of various examples for implementing the invention, making reference to the numbering system adopted in the figures.

For the different examples of implementation which will be represented below, the low voltage power network has been selected as means of communication. This means is hostile to the greater part of communications, due to the presence of noise and its behavior depending on the frequency, with which the invention process can be used to achieve a greater bandwidth, and with it, greater transmission capacity, without high costs.

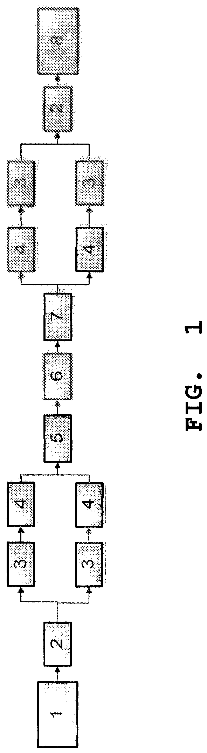

Figure 1 shows the data route between the different blocks of an example of the embodiment in which the system using the multiband process uses exactly two bands. In the transmitter, there is a data separator (1) followed by a control block giving access to the means (2). Subsequently, each band is processed separately by a physical adequacy block (3) and an analog front-end (4). Finally, the signals are combined through a signal combination block (5) and they are introduced into the communication channel (6). At the receiver, the signals are obtained from the channel (6) and are separated through a signal separating filter (7). Each band is processed with an analog front-end (4) and a different physical adequacy block (3) and finally, the data are moved to a access block to the means (2) and the data are combined through a data combination block (8).

The invention is based on synchronous transmitting and receiving on the different bands and in using symbol times on each band that are multiples of the smallest symbol half used on the different bands, which permits controlling access to the means using a signal means access control block (2). The means of communication and the size of the different bands are immaterial, but the best results are obtained in systems that use as transmission means the power network, the coaxial cable and the braided cable using bandwidths of at least 20 MHz, since this way, frequency bands or ranges with lots of noise or interference can be avoided.

Upon transmitting and receiving synchronously, this is, transmit at the same time over all bands or receiving at the same time over all bands, the specifications of the analog filters are more relaxed than if the bands were independent, since one avoids having to receive a very low output signal while transmitting a signal with much greater power on an adjacent band. Also, the needs for a guard band size between bands are reduced and processing blocks can be reused for transmitting and receiving blocks for processing the bands in series.

Even though in an implementation, it is possible to use equal bands, this is not strictly required. It is only required that the symbol times of the different bands are full multiples of the smallest time half among those used in the various bands.

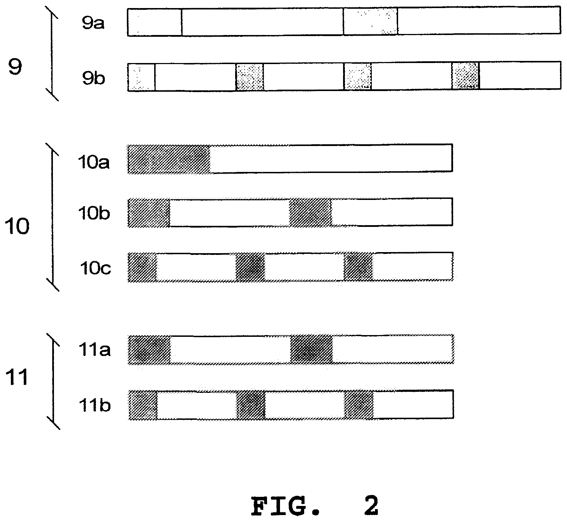

This can be observed in Figure 2 where the first example of embodiment (9) shows the ratio in a two-band system (9a, 9b) where in time in which the band with the smallest frequency (9a) transmits one symbol, the greatest band transmits two symbols (9b). In this example, if a rapid Fourier transform block (FFT) is used to make the shift between time and frequency, and said FFT is reused for all bands, first it will process a symbol of the band with the lowest frequency and subsequently, two symbols of the other band, as so on, while distributing the data in a similar fashion. In the next example (10), three bands (10a, 10b, 10c) are used where in the time period that the first band (10a) transmits one symbol, the second one (10b) transmits two and the third one (10c) transmits three. The last example (11) uses two bands (11a, 11b) in which the ratio is three times half of the band symbol that uses the smallest symbol.

Using one symbol size or another depends on the features of the communications channel. For instance, in the case of the low voltage power network, it is known that a distortion takes place caused by the arrival at the receiver of identical signals at different times due to the existence of multiples paths (delay spread). This effect diminishes as the frequency increases, so that it would be preferable to use short symbols.

To obtain a more advantageous system, in another example of embodiment, the same number of points can be used on all the bands, so that the time and frequency conversion means will have the same number of points in each of the bands and the frequency processing will use the same structure for each of the bands. The time and frequency conversion means as well as frequency processing are included in the physical adequacy blocks (3) which can be observed in Figure 1.

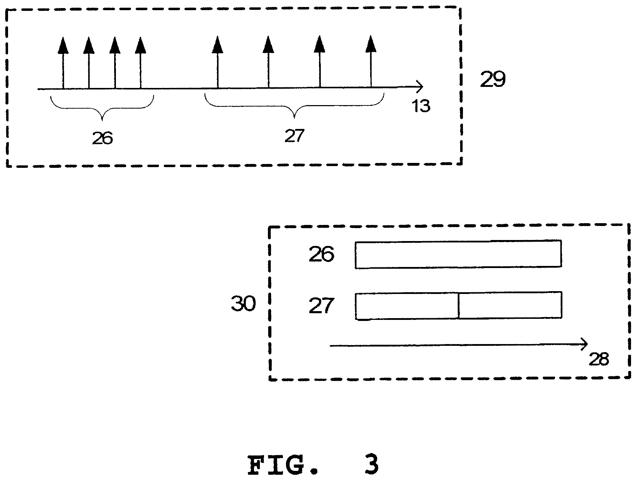

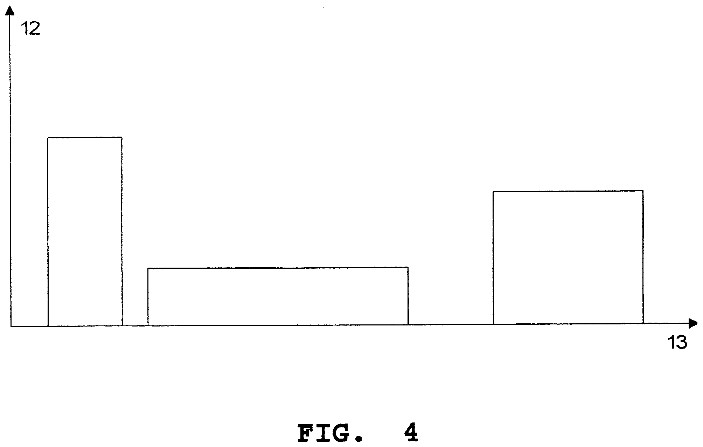

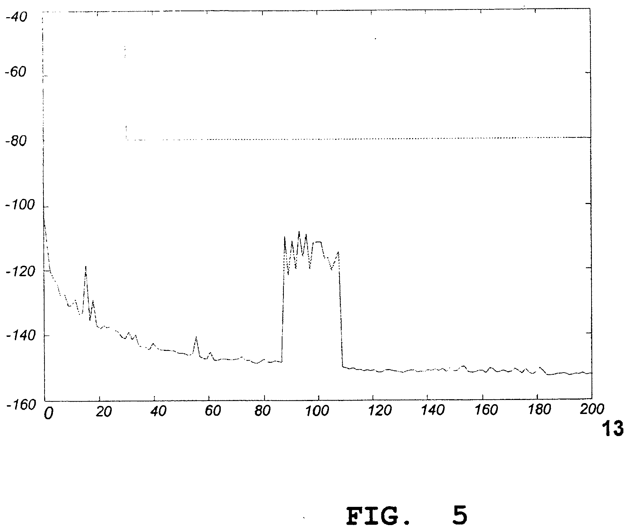

In this case, it is possible to vary the separation between carriers so that the symbols generated have a longer or shorter duration. An example can be observed in Figure 3. In said figure, there is a frequency representation (20 and another one in time (30) of two bands (26) and (27) where the axes of frequency (13) and time (28) are marked. In this figure, one observes that if the separation between carriers is duplicated, the symbol duration will be half and the width of the band covered would be double when using the same number of carriers. Each of the points of the direct and inverse Fourier transform (DFT/IDFT) will correspond to active or inactive carriers, which gives greater flexibility at the time of adapting the system to the available bandwidth. The power injected in each of the bands can be different, since the existing codes or standards must be complied with and it must be calculated while taking into account the noise in the channel at these frequencies. Figure 4 shows the graph of the injectable power spectral density in an example for the power network and a system with three bands. The maximum power spectral density of the injected signal (12) is different for each of the three bands of the system on the basis of frequency (13). Figure 5 shows the limit of the injected power spectral density (14) and the background noise (15) on the basis of frequency (13). With this channel behavior, it is recommended to divide the 0 to 200 MHz frequency range in three bands: 0-30, 30-88 and 108-200 MHz. The first division takes place to comply with the injected power spectral density, while the second division takes place to avoid the high noise band (modulated frequency radio band).

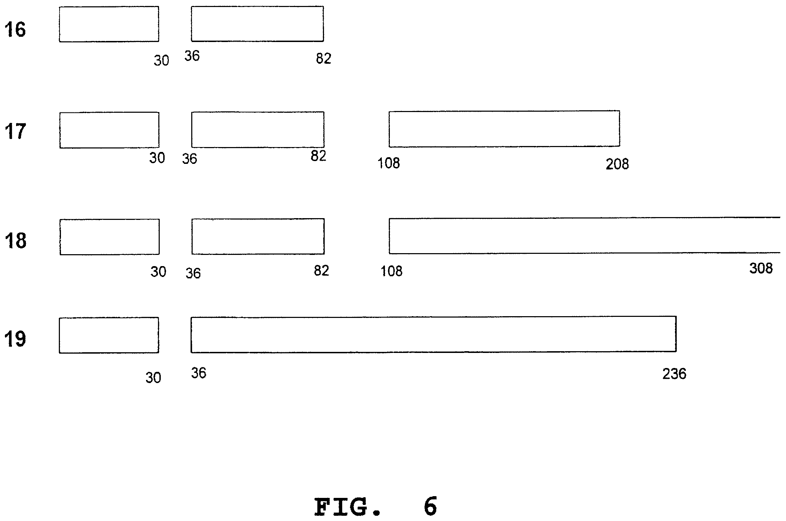

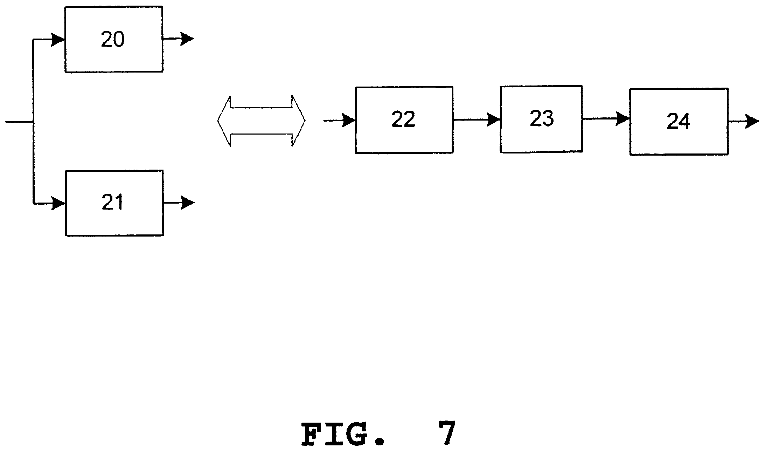

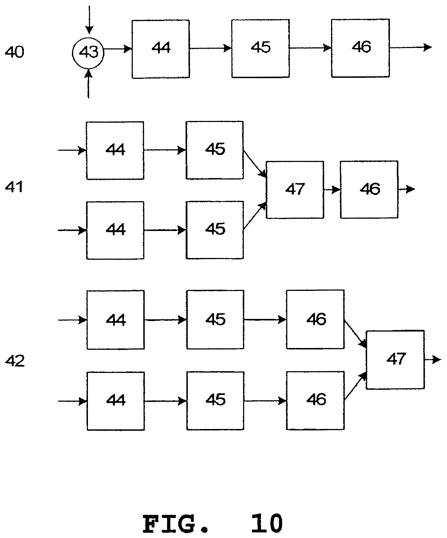

A form for generating the signal in each band consists of generating it in the base band and to move it subsequently to adequate frequencies. For the prior example of embodiment, when an FFT of 2048 points is used and a sampling frequency of 50 MHz for the 0 to 30 MHz band, one can use the same FFT of 2048 points at 100 MHz for the 30 to 88 MHz band and a similar one for the 108 to 200 MHz band. If one includes a guard band in the 30 to 88 MHz band, by reducing its size until the band is 36 to 82 MHz, such reduced band could be generated by applying an FFT of 2048 points at 50 MHz. In figure 6, bands are shown that can be used in various examples of embodiment. The first division (16) used two bands, one of 0 to 30 MHz and another of 36 to 82 MHz. The second division (17) uses three bands, from 0 to 30, from 36 to 82 and from 108 to 208 MHz. The third division (17) uses the bands from 0 to 30, 36 to 82 and 108 to 308 MHz. The fourth division (18) uses bands from 0 to 30 and 36 to 236 MHz. To reduce the cost of system implementation, one can reuse several blocks in processing signals of the different bands. This can be observed in the example of figure 7 where one has gone from having a block for processing the band located at higher frequency (20) and a block for processing the band at a lower frequency (21), to having a common block (22) that processes the frequency signals, a common block for frequency-to-time conversion of the signals transmitted over the two bands (23) and a common block for processing in time of the transmitted signal (24). During receiving, the inverse process takes place. The various blocks can be reused or not independently, in other words, the frequency process and the frequency-to-time conversion can be reused, and the processing in time for each band with independent blocks can be performed. In the invention process, a separate process always takes place in each band in the analog part during receiving (understood as analog front-end - AFE - and the converters). On the other hand, the analog front-end (AFE) in transmission can be common for all the bands or can be different for each of them. In the event that an automatic gain control (AGC) is used, said control can also be independent for each of the bands. In figure 10, three forms of embodiment are shown for an analog front-end (AFE) for transmission in the system that applies the invention process. In the first embodiment (40), all bands use a single AFE chain for transmission, which implies that they have been added digitally (43) ahead of the digital analog converter (DAC 44), both included in the physical adequacy block (3), then they are filtered (45) and finally they are amplified (Line Driver 46) in the analog front-end (4). In the second embodiment (41), each band is processed separately with its own digital analog converter (44) and its own filter (45), after which the signals are combined (47) and finally, the result of the combination is amplified (46). In the third embodiment (42), each band is processed separately with its own digital analog converter (44), its own filter (45) and its own amplifier (46), after which the various signals are combined (47).

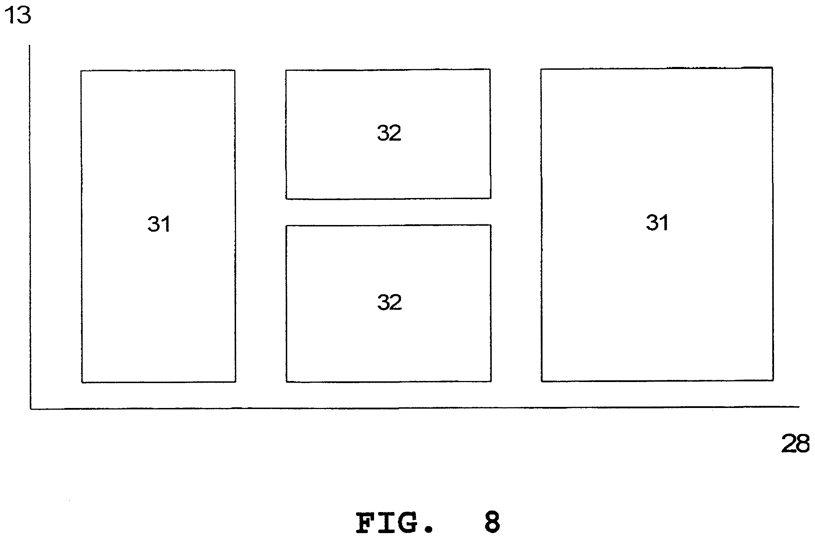

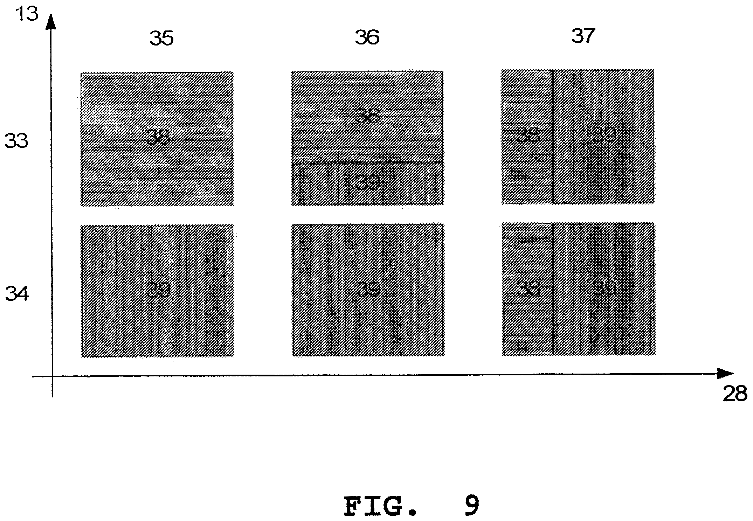

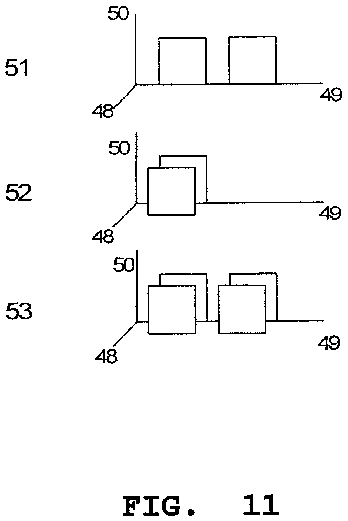

Taking advantage that one transmits always over all bands simultaneously, it is possible to synchronize the system using only one of the multiple bands of the system. Since the band with the lowest frequency usually is the one which attenuates the least at large distances, the lowest frequency band will be used in another example of embodiment to perform such synchronization. On the other hand, Figure 8 shows how one can make compatible systems which use bands synchronously, like the system that used the invention process, with other systems that used the bands asynchronously. Said figure shows the use of bands with respect to a time axis (28) and a frequency axis (13). Initially, the bandwidth is used synchronously (31), then, there are two asynchronous bands (32) and finally, it is used again synchronously (31). The duration and location in time of the various periods can be communicated through access assignment messages to the means by the network coordinator. In any case, it is not mandatory to use one whole band to communicate with a single user. In figure 9, the representation in time (28) and frequency (13) is shown for three different cases that use two different bands (33) and (34). In the first case (35), each band is used to transmit data to a different user (38) and (39). In the second case, (36) there are carrier for the first band (33) that are direct to a user (38) and carriers
of the same band (33) that are directed to the other user (39), which also use all carriers of the second band (34). In the third case (37), each user (38) and (39) uses the two complete bands but at different times. A similar scheme can be used to transmit data from several users to a same receiver through OFDMA techniques. For instance, several transmitters can simultaneously use different bands or carrier groups to transmit to one and the same node. If a MIMO processing block (known by the state of the art) is added to the system that implements the invention process, it is possible to multiplex the bands in space as well as in frequency as described until now. This can be observed in figure 11, where axis X (48) corresponds to several space channels, axis Y (49) corresponds to the frequency and axis Z (50) corresponds to the injectable power spectral density. In this system, bands can transmit at different frequencies without using MIMO processing (51) or it can transmit them on the same frequency band through spatially different channels and use MIMO processing to separate the information of the various bands (52). It is also possible to do both simultaneously, as can be seen in the third case (53).

## Claims

1. A system for transmitting, the system comprising:
a physical adequacy block (3) followed by an analog front-end (4) configured to process data in a plurality of frequency bands, wherein data in each band is processed separately, and wherein each frequency band has an associated symbol time, and each associated symbol time is a whole multiple of one half of a smallest symbol time of all of the frequency bands,
and wherein the system uses a fast Fourier transform, FFT, block to make the shift between frequency and time;
a signal combiner block (5) configured to combine the data in the plurality of frequency bands into a single signal for simultaneous transmission on a transmission medium (6), and
wherein the said fast Fourier transform, FFT, block is reused for all the frequency bands and is configured to (i) process a symbol of a first frequency band in the plurality of frequency bands, the said first frequency band being the band with the lowest frequency and, subsequently, one after another, process two or more symbols of the other frequency bands of the plurality of frequency bands according to the ratios between the associated symbol times of the each other frequency band of the plurality of frequency bands and the first band, and (ii) distribute data in a corresponding fashion,

2. The system of claim 1, further comprising a transmitter including i) the physical adequacy block and ii) the analog front end, wherein the transmitter is configured to simultaneously transmit the data in the plurality of frequency bands.

3. The system of claim 1, further comprising a receiver configured to simultaneously receive the data in the plurality of frequency bands.

4. The system of claim 1, wherein the transmission medium comprises an electrical grid, a coaxial cable, or a twisted-pair wire.

5. The system of claim 1, wherein each frequency band has a width of at least 20 MHz.

6. The system of claim 1, wherein automatic gain control is applied independently to each of the plurality of frequency bands.

7. The system of claim 1, wherein the system performs synchronization using only one of the plurality of frequency bands.

8. A method for transmitting data, the method comprising:
separately processing data separated in a plurality of frequency bands, wherein each frequency band has an associated symbol time, and each associated symbol time is a whole multiple of one half of a smallest symbol time of all of the frequency bands; and
combining the data in the plurality of frequency bands into a single signal;
providing the data in the plurality of frequency bands combined into the single signal for simultaneous transmission on a transmission medium;
wherein separately processing data separated in a plurality of frequency bands comprises using a fast Fourier transform, FFT, block to convert the data from frequency to time domain, and reusing said FFT block for all the frequency bands by (i) processing a symbol of a first frequency band in the plurality of frequency bands, the said first frequency band being the band with the lowest frequency and, subsequently, one after another, processing two or more symbols of the other frequency bands of the plurality of frequency bands according to the ratios between the associated symbol times of the each other frequency band of the plurality of frequency bands and the first band, and (ii) distributing data in a corresponding fashion.

9. The method of claim 8, further comprising:
simultaneously transmitting the data in the plurality of frequency bands.

10. The method of claim 8, further comprising:
simultaneously receiving the data in the plurality of frequency bands.

11. The method of claim 8, wherein the transmission medium comprises an electrical grid, a coaxial cable, or a twisted-pair wire.

12. The method of claim 8, wherein each of the plurality of frequency bands has a width of at least 20 MHz.

13. The method of claim 9, further comprising:
applying automatic gain control to each of the plurality of frequency bands independently.

14. The method of claim 9, further comprising:
performing synchronization using only one of the plurality of frequency bands.

## Patentansprüche

1. System zum Senden, wobei das System umfasst:
einen physischen Adäquatheitsblock (3), gefolgt von einem analogen Front-End (4), das dazu konfiguriert ist, Daten in einer Vielzahl von Frequenzbändern zu verarbeiten, wobei die Daten in jedem Band separat verarbeitet werden, und wobei jedes Frequenzband eine zugehörige Symbolzeit aufweist und jede zugehörige Symbolzeit ein ganzzahliges Vielfaches von einer Hälfte einer kleinsten Symbolzeit aller Frequenzbänder ist,
und wobei das System einen Fast-Fourier-Transformationsblock, FFT, verwendet, um die Verschiebung zwischen der Frequenz und der Zeit vorzunehmen;
einen Signalkombinationsblock (5), der dazu konfiguriert ist, die Daten in der Vielzahl von Frequenzbändern zu einem einzigen Signal zur gleichzeitigen Übertragung auf einem Übertragungsmedium (6) zu kombinieren, und
wobei der Fast-Fourier-Transformationsblock, FFT, für alle Frequenzbänder wiederverwendet wird und dazu konfiguriert ist, (i) ein Symbol eines ersten Frequenzbandes in der Vielzahl von Frequenzbändern zu verarbeiten, wobei das erste Frequenzband das Band mit der niedrigsten Frequenz ist, und anschließend der Reihe nach zwei oder mehr Symbole der anderen Frequenzbänder der Vielzahl von Frequenzbändern entsprechend den Verhältnissen zwischen den zugehörigen Symbolzeiten der jeweiligen anderen Frequenzbänder der Vielzahl von Frequenzbändern und dem ersten Frequenzband zu verarbeiten, und (ii) die Daten in einer entsprechenden Weise zu verteilen.

2. System nach Anspruch 1, des Weiteren umfassend einen Sender, der i) den physikalischen Adäquatheitsblock und ii) das analoge Front-End aufweist, wobei der Sender dazu konfiguriert ist, gleichzeitig die Daten in der Vielzahl von Frequenzbändern zu übertragen.

3. System nach Anspruch 1, des Weiteren umfassend einen Empfänger, der dazu konfiguriert ist, gleichzeitig die Daten in der Vielzahl von Frequenzbändern zu empfangen.

4. System nach Anspruch 1, wobei das Übertragungsmedium ein Stromnetz, ein Koaxialkabel oder ein verdrilltes Leiterpaar umfasst.

5. System nach Anspruch 1, wobei jedes Frequenzband eine Breite von mindestens 20 MHz aufweist.

6. System nach Anspruch 1, wobei eine automatische Verstärkungsregelung unabhängig auf jedes der Vielzahl von Frequenzbändern angewendet wird.

7. System nach Anspruch 1, wobei das System die Synchronisierung unter Verwendung von nur einem aus der Vielzahl von Frequenzbändern durchführt.

8. Verfahren zum Senden von Daten, wobei das Verfahren umfasst:
separates Bearbeiten von Daten, die in einer Vielzahl von Frequenzbändern aufgeteilt sind, wobei jedes Frequenzband eine zugehörige Symbolzeit aufweist und jede zugehörige Symbolzeit ein ganzzahliges Vielfaches von einer Hälfte einer kleinsten Symbolzeit aller Frequenzbänder ist; und
Kombinieren der Daten in der Vielzahl von Frequenzbändern zu einem einzigen Signal;
Bereitstellen der Daten in der Vielzahl von Frequenzbändern, die zu dem einzigen Signal kombiniert sind, zur gleichzeitigen Übertragung auf einem Übertragungsmedium;
wobei das separate Verarbeiten der Daten, die in einer Vielzahl von Frequenzbändern aufgeteilt sind, das Verwenden eines Fast-Fourier-Transformationsblocks, FFT, umfasst, um die Daten aus Frequenz in eine Zeitdomäne umzuwandeln, und das Wiederverwenden des FFT-Blocks für alle Frequenzbänder durch (i) Verarbeiten eines Symbols eines ersten Frequenzbandes in der Vielzahl von Frequenzbändern, wobei das erste Frequenzband das Band mit der niedrigsten Frequenz ist, und anschließendes Verarbeiten, der Reihe nach, von zwei oder mehr Symbolen der anderen Frequenzbänder der Vielzahl von Frequenzbändern entsprechend den Verhältnissen zwischen den zugehörigen Symbolzeiten der jeweiligen anderen Frequenzbänder der Vielzahl von Frequenzbändern und dem ersten Frequenzband, und (ii) Verteilen der Daten in einer entsprechenden Weise.

9. Verfahren nach Anspruch 8, des Weiteren umfassend:
gleichzeitiges Senden der Daten in der Vielzahl von Frequenzbändern.

10. Verfahren nach Anspruch 8, des Weiteren umfassend:
gleichzeitiges Empfangen der Daten in der Vielzahl von Frequenzbändern.

11. Verfahren nach Anspruch 8, wobei das Übertragungsmedium ein Stromnetz, ein Koaxialkabel oder ein verdrilltes Leiterpaar umfasst.

12. Verfahren nach Anspruch 8, wobei jedes aus der Vielzahl von Frequenzbändern eine Breite von mindestens 20 MHz aufweist.

13. Verfahren nach Anspruch 9, des Weiteren umfassend:
Anwenden von automatischer Verstärkungsregelung unabhängig auf jedes aus der Vielzahl von Frequenzbändern.

14. Verfahren nach Anspruch 9, des Weiteren umfassend:
Durchführen von Synchronisation unter Verwendung von nur einem aus der Vielzahl von Frequenzbändern.

## Revendications

1. Système de transmission, le système comprenant :
un bloc d'adéquation physique (3) suivi d'un frontal analogique (4) conçus pour traiter des données dans une pluralité de bandes de fréquences, dans lequel les données de chaque bande sont traitées séparément et dans lequel chaque bande de fréquence a un temps de symbole associé et chaque temps de symbole associé est un multiple entier d'une moitié d'un plus petit temps de symbole de toutes les bandes de fréquences,
et dans lequel le système utilise un bloc de transformée de Fourier rapide, soit FFT (*fast Fourier transform*), pour procéder au changement entre fréquence et temps ;
un bloc combineur de signaux (5) conçu pour combiner les données dans la pluralité de bandes de fréquences en un signal unique pour une transmission simultanée sur un support de transmission (6), et
dans lequel ledit bloc de transformée de Fourier rapide, FFT, est réutilisé pour toutes les bandes de fréquences et est conçu pour (1) traiter un symbole d'une première bande de fréquence de la pluralité de bandes de fréquences, ladite première bande de fréquence étant la bande qui a la fréquence la plus basse et, ensuite, successivement, traiter deux ou plus de deux symboles des autres bandes de fréquences de la pluralité de bandes de fréquences en fonction des rapports entre les temps de symbole associés de chaque autre bande de fréquence de la pluralité de bandes de fréquences et de la première bande, et (ii) répartir les données d'une manière correspondante.

2. Système selon la revendication 1, comprenant, en outre, un émetteur incluant i) le bloc d'adéquation physique et ii) le frontal analogique, dans lequel l'émetteur est conçu pour émettre simultanément les données dans la pluralité de bandes de fréquences.

3. Système selon la revendication 1, comprenant, en outre, un récepteur conçu pour recevoir simultanément les données dans la pluralité de bandes de fréquences.

4. Système selon la revendication 1, dans lequel le support de transmission comprend un réseau électrique, un câble coaxial ou une paire torsadée.

5. Système selon la revendication 1, dans lequel chaque bande de fréquence a une largeur d'au moins 20 MHz.

6. Système selon la revendication 1, dans lequel une commande automatique de gain est appliquée de manière indépendante à chacune de la pluralité de bandes de fréquences.

7. Système selon la revendication 1, dans lequel le système procède à une synchronisation en utilisant une seule de la pluralité de bandes de fréquences.

8. Procédé de transmission de données, le procédé comprenant :
un traitement séparé de données séparées dans une pluralité de bandes de fréquences, dans lequel chaque bande de fréquence a un temps de symbole associé, et chaque temps de symbole associé est un multiple entier d'une moitié d'un plus petit temps de symbole de toutes les bandes de fréquences ; et
une combinaison des données de la pluralité de bandes de fréquences en un signal unique ;
la fourniture des données de la pluralité de bandes de fréquences combinées en ledit signal unique pour une transmission simultanée sur un support de transmission ;
dans lequel le traitement séparé de données séparées dans une pluralité de bandes de fréquences comprend l'utilisation d'un bloc de transformée de Fourier rapide, FFT, pour convertir les données du domaine de la fréquence au domaine du temps, et la réutilisation dudit bloc FFT pour toutes les bandes de fréquences, le bloc
(i) traitant un symbole d'une première bande de fréquence de la pluralité de bandes de fréquences, ladite première bande de fréquence étant la bande qui a la fréquence la plus basse et, ensuite, successivement, traitant deux ou plus de deux symboles des autres bandes de fréquences de la pluralité de bandes de fréquences en fonction des rapports entre les temps de symbole associés de chaque autre bande de fréquence de la pluralité de bandes de fréquences et de la première bande, et
(ii) répartissant les données d'une manière correspondante.

9. Procédé selon la revendication 8, comprenant, en outre :
une transmission simultanée des données dans la pluralité de bandes de fréquences.

10. Procédé selon la revendication 8, comprenant, en outre :
une réception simultanée des données dans la pluralité de bandes de fréquences.

11. Procédé selon la revendication 8, dans lequel le support de transmission comprend un réseau électrique, un câble coaxial ou une paire torsadée.

12. Procédé selon la revendication 8, dans lequel chacune de la pluralité de bandes de fréquences a une largeur d'au moins 20 MHz.

13. Procédé selon la revendication 9, comprenant, en outre :
l'application d'une commande automatique de gain à chacune de la pluralité de bandes de fréquences d'une manière indépendante.

14. Procédé selon la revendication 9, comprenant, en outre :
l'exécution d'une synchronisation en utilisant une seule de la pluralité de bandes de fréquences.
